# FASCICULE DE BREVET EUROPEEN

(11) **EP 2 915 109 B1**
(45) Date de publication et mention de la délivrance du brevet: **12.09.2018**
(21) Numéro de dépôt: 13808142.7
(22) Date de dépôt: 03.12.2013
(51) Int. Cl.: G06Q 10/00

(54) **PROCÉDÉ DE COMMUNICATION ENTRE PLUSIEURS UTILISATEURS MUNIS DE TERMINAUX DE COMMUNICATION, PAR L'INTERMEDIAIRE D'UN ESPACE VIRTUEL DE COMMUNICATION**
VERFAHREN ZUR KOMMUNIKATION ZWISCHEN MEHREREN BENUTZERN MIT ÜBERTRAGUNGSTERMINALEN MITTELS EINEM VIRTUELLEN ÜBERTRAGUNGSRAUM
METHOD OF COMMUNICATION BETWEEN SEVERAL USERS EQUIPPED WITH TERMINAL COMMUNICATION BY MEANS OF A VIRTUAL SPACE COMMUNICATION

(30) Priorité: 03.12.2012 FR 1261555
(43) Date de publication de la demande: 09.09.2015
(73) Titulaire: Orange, 75015 Paris (FR)
(72) Inventeur: LE HUEROU, Emmanuel, 22700 Saint Quay Perros (FR); TOUTAIN, François, 22700 Louannec (FR); MERCIER, Violaine, 22560 Pleumeur Bodou (FR)
(74) Mandataire: Cabinet Plasseraud
(86) Numéro de dépôt international: PCT/FR2013/052915
(87) Numéro de publication internationale: WO 2014/087086

(56) Documents cités:
- US-A1- 2011 004 501
- US-A1- 2012 054 281

## Description

L'invention concerne de manière générale le domaine des télécommunications et plus précisément la communication entre des utilisateurs de terminaux de télécommunication au travers d'un espace virtuel de communication multimédia hébergé par un serveur.

Avec l'évolution, ces dernières années, des terminaux de communication tels que les "téléphone intelligents" (*smartphones* en anglais), et des réseaux de communications, avec notamment l'apparition des réseaux dits sociaux basés sur l'Internet, les utilisateurs de terminaux fixes ou mobiles peuvent utiliser des applications installées sur leur terminal et/ou accessibles sur Internet, pour partager des activités telles que le partage de photos ou de vidéos, de jeux, ou l'échange de messages. On peut citer à titre d'exemple le service de réseau social *Facebook*™ permettant en particulier le partage de photos/vidéos entre amis, l'application mobile *WhatsApp*™ intégrant un système de messagerie instantanée, l'application mobile de jeu de dessin *Draw Something*™*.* Les solutions de partage d'activités actuelles apparaissent donc relativement spécialisées.

On connait par ailleurs des applications de travail collaboratif, fournissant le cas échéant un espace de travail virtuel, c'est-à-dire un site qui centralise tous les outils liés à la conduite d'un projet ou d'une tâche particulière. On peut citer par exemple des applications connues telles que WebEX™ (visioconférence, web conférence), ou Google Docs™ (suite bureautique web). De manière générale, les applications du type précité permettent un échange synchrone ou asynchrone entre utilisateurs, appliqué à des documents multimédias stockés de manière centralisée dans un serveur. La possibilité pour un utilisateur donné, de créer, modifier ou lire un document est dépendante de la gestion des droits d'accès paramétrés pour cet utilisateur.

Dans le domaine de la communication interpersonnelle par échange de messages ou par communication vocale, les applications récentes sur les *smartphones* offrent à l'utilisateur des fonctionnalités de sauvegarde locale des messages textuels (SMS, MMS) et vocaux échangés avec ses contacts. Cette sauvegarde locale est propre à l'utilisateur mais n'est pas partagée avec les contacts impliqués dans les échanges. Les solutions de communication classiques fonctionnent par conséquent indépendamment les unes des autres, sans assurer par ailleurs de cohérence entre les données de communication sauvegardées dans les terminaux des utilisateurs impliqués dans les communications considérées.

Dans le contexte de l'état de la technique exposé ci-dessus, on peut actuellement constater une hétérogénéité des applications de communication et de partage d'activités entre utilisateurs, et en particulier une gestion de la confidentialité des données partagées ou échangées - c'est-à-dire une gestion des droits attribués aux utilisateurs pour l'accès aux données échangées -, qui dépend de l'application considérée. Il n'existe donc pas actuellement de solution de communication interpersonnelle capable d'offrir à des utilisateurs de terminaux un espace commun de communication au sein duquel prévaut la copropriété des moyens de communication et des données associées - telles que les contenus multimédias partagés et les données d'historique des interactions des utilisateurs entre eux et avec les contenus -, sans qu'il soit nécessaire de mettre en oeuvre une gestion des droits spécifique.

Par conséquent, il existe actuellement un besoin de solutions techniques permettant d'offrir un espace numérique commun à un ensemble d'utilisateurs, cet espace commun étant structuré en différentes activités, de type synchrone ou asynchrone, incluant des modes de communication classiques (échanges de message, communications vocale, vidéoconférence, ...) et des modes de communication portant sur des contenus multimédias partagés, sans nécessiter de gestion de droits d'accès complexe.

US2011004501 divulgue un système de gestion de terminaux connectés à un serveur de communication.

US2012054281 divulgue un espace virtuel pour utilisateurs, pour améliorer l'innovation de groupe.

La présente invention a pour objectif notamment de répondre au besoin précité. A cet effet, selon un premier aspect, l'invention a pour objet un procédé de communication entre plusieurs utilisateurs munis de terminaux de communication, par l'intermédiaire d'une espace virtuel de communication fourni par un serveur de communication sur un réseau de communication. Conformément à l'invention un tel procédé comprend des opérations consistant à :
- configurer une application serveur de manière à créer un espace virtuel de communication pour un groupe d'utilisateurs déterminé, ledit espace virtuel fournissant une pluralité de modes de communication distincts, dits "activités", au moins une activité portant sur un au moins un contenu multimédia associé, dit contenu d'activité, partagé par les utilisateurs du groupe, et étant mise en oeuvre par des actions déterminées dont l'exécution peut être déclenchée par tous les utilisateurs du groupe, lesdites actions incluant au moins des actions de création, modification ou suppression d'un contenu d'activité donné ;
- traiter des requêtes d'actions relatives à une activité considérée, en provenance des terminaux des utilisateurs du groupe, de manière séquentielle selon l'ordre d'arrivée desdites requêtes.

Grâce au procédé de communication de l'invention défini ci-dessus en termes généraux, un groupe d'utilisateurs peut disposer d'un espace virtuel de communication multimodal, c'est-à-dire offrant des modes de communication variés, tels que la communication téléphonique, visiophonique, l'échanges de messages de type SMS, MMS, électronique (*email*)*,* ou message instantané (également désigné par *chat* en anglais) ; mais offrant également des modes de communication par partage synchrone ou asynchrone de contenus multimédias : photos, vidéos, dessins etc. De plus, selon l'invention, tous les utilisateurs du groupe considéré disposent des mêmes droits d'accès et de modification relatifs aux contenus partagés, ce qui simplifie le paramétrage de l'application serveur, réalisant en quelque sorte une copropriété de l'espace virtuel et des contenus associés entre les différents utilisateurs du groupe. Le traitement des requêtes d'action envoyées par les utilisateurs au serveur, en fonction de l'ordre d'arrivée des requêtes permet de compenser l'absence de gestion de droits d'accès définis en fonction de l'utilisateur, et d'établir un espace virtuel de communication pour lequel tous les membres du groupe disposent des mêmes droits.

Selon un mode de réalisation particulier de l'invention, l'opération de configuration du serveur afin de créer l'espace virtuel, comporte les étapes suivantes, mises en oeuvre au travers d'une page web d'accès au serveur présentée dans un terminal d'un premier utilisateur :
- la désignation des utilisateurs du groupe d'utilisateurs de l'espace virtuel, chaque utilisateur du groupe étant associé à un identifiant d'utilisateur ;
- le choix des activités partagées par le groupe au travers de l'espace virtuel ;
- la transmission aux utilisateurs désignés du groupe d'une notification invitant les utilisateurs à se connecter à l'espace virtuel.

Ainsi, selon ce mode de réalisation, l'utilisateur (premier utilisateur) "créateur" de l'espace virtuel peut par exemple choisir les utilisateurs du groupe d'utilisateurs parmi les contacts identifiés dans le carnet d'adresses de son terminal et créer ainsi de manière aisée une communauté d'utilisateurs partageant une espace virtuel de communication. La notification invitant les utilisateurs à se connecter à l'espace virtuel venant d'être créer par le premier utilisateur, permet aux utilisateurs désignés du groupe, d'une part, d'être informés de la création de l'espace virtuel de communication et, selon une exemple de réalisation, de prendre connaissance des données d'identification (identifiant et éventuellement un mot de passe associé) qui leur permettront d'accéder à l'espace virtuel, via la page web d'accès au serveur.

Selon une caractéristique de réalisation, chacun des terminaux des utilisateurs du groupe est équipé d'une application cliente d'accès à l'espace virtuel, cette application cliente étant apte à déclencher la connexion du terminal au serveur, la connexion déclenchant le téléchargement dans une mémoire cache du terminal d'une copie de réplication des contenus multimédias associés aux activités fournies par l'espace virtuel.

En d'autres termes, selon la caractéristique précitée de l'invention, une fois l'application cliente lancée dans le terminal d'un utilisateur du groupe d'utilisateurs, cette dernière déclenche automatiquement le téléchargement d'un état courant de l'espace virtuel et le stockage temporaire de cet état dans une mémoire de type cache du terminal. Cette disposition permet avantageusement à l'utilisateur du terminal considéré de pouvoir, d'une part, visualiser au travers d'une interface graphique de l'application cliente, l'état d'utilisation par l'ensemble des utilisateurs du groupe, des différents modes de communication offerts par l'espace virtuel, et d'autre part de pouvoir exercer une action sur un contenu stocké localement (photo par exemple) pour plus de réactivité, et avec également la possibilité d'exercer une action sur un contenu hors connexion avec le serveur.

Selon une caractéristique de réalisation de l'invention, l'application cliente équipant un terminal d'utilisateur connecté au serveur, met en oeuvre une opération initiale de mise à jour dans le terminal des algorithmes d'exécution des activités fournies par l'espace virtuel hébergé dans le serveur.

Une activité donnée fournie par l'espace de communication peut être définie par un certains nombre d'actions portant sur un contenu multimédia, tel qu'une vidéo, et un traitement associé, l'ensemble étant mis en oeuvre par un algorithme d'exécution de l'activité considérée (sous forme de module logiciel). L'opération initiale précitée de mise à jour dans le terminal des algorithmes d'exécution d'activités permet au terminal de télécharger les algorithmes non présents initialement dans la version de l'application cliente installée dans le terminal, ou bien d'installer de nouveaux algorithmes d'exécution correspondant à de nouvelles activités.

Selon une autre caractéristique du procédé de communication selon l'invention, lorsque le traitement dans le serveur d'une requête d'action relative à une activité considérée provoque l'exécution de l'action, une mise à jour du ou des contenus multimédias associés à l'activité considérée, est effectuée dans la copie de réplication des contenus multimédias de l'espace virtuel, stockée dans la mémoire cache de chacun des terminaux d'utilisateur.

Ainsi, les utilisateurs du groupe partageant l'espace de communication disposent en local, c'est-à-dire dans leur terminaux respectifs d'une version à jour de l'espace virtuel reflétant les dernières modifications apportées à l'espace virtuel. Cette version à jour se traduit en conséquence par une mise à jour de l'interface graphique mise en oeuvre par l'application cliente selon l'invention, exécutée dans chacun des terminaux.

Selon un deuxième aspect, l'invention a pour objet un serveur de communication adapté pour la mise en oeuvre d'un procédé, selon l'invention, de communication sur un réseau de communication, entre plusieurs utilisateurs munis de terminaux de communication par l'intermédiaire d'une espace virtuel de communication fourni par le serveur. Conformément à l'invention, un tel serveur comprend :
- des moyens de création d'un espace virtuel de communication pour un groupe d'utilisateurs déterminé, cet espace virtuel fournissant une pluralité de modes de communication distincts, dits "activités", au moins une activité portant sur au moins un contenu multimédia associé, dit contenu d'activité, partagé par les utilisateurs du groupe, et étant mise en oeuvre par des actions déterminées dont l'exécution peut être déclenchée par tous les utilisateurs du groupe, lesdites actions incluant au moins des actions de création, modification ou suppression d'un contenu d'activité donné ;
- des moyens de traitement de requêtes d'actions relatives à une activité considérée, en provenance des terminaux des utilisateurs du groupe, de manière séquentielle selon l'ordre d'arrivée desdites requêtes.

Corrélativement, selon un troisième aspect, l'invention concerne un terminal de communication, comportant :
- des moyens de connexion à un serveur de communication sur un réseau de communication, afin de créer un espace virtuel de communication pour un groupe d'utilisateurs déterminé, cet espace virtuel fournissant une pluralité de modes de communication distincts, dits "activités", au moins une activité portant sur au moins un contenu multimédia associé, dit contenu d'activité, partagé par les utilisateurs du groupe, et étant mise en oeuvre par des actions déterminées dont l'exécution peut être déclenchée par les utilisateurs du groupe, lesdites actions incluant au moins des actions de création, modification ou suppression d'un contenu d'activité donné ;
- des moyens de génération et d'envoi, au serveur, de requêtes d'actions relatives à une activité considérée, les requêtes d'actions relatives à une activité considérée en provenance des terminaux des utilisateurs du groupe étant traitées de manière séquentielle selon l'ordre d'arrivée des requêtes dans le serveur.

Selon des caractéristiques particulières de l'invention, un tel terminal de communication comprend:
- des moyens de mémorisation, suite à la connexion au serveur de communication, d'une copie de réplication des contenus multimédias associés aux activités fournies par l'espace virtuel, et de mise à jour de la copie de réplication des contenus multimédias.
- des moyens de mémorisation des algorithmes d'exécution des activités fournies par l'espace virtuel fourni par le serveur, et de mise à jour de ces algorithmes.

De manière générale, le procédé susmentionné de communication selon l'invention est mis en oeuvre par l'exécution d'applications logicielles installées et exécutées respectivement dans un serveur de communication (application serveur) et dans un terminal de communication (application cliente) selon l'invention. Ces applications logicielles mettent en oeuvre un ou plusieurs programmes d'ordinateur comprenant des instructions dont l'exécution par un processeur équipant le serveur ou le terminal, selon le cas, permet de mettre en oeuvre les étapes d'un procédé de communication selon l'invention.

Par conséquent, selon un troisième aspect, la présente invention concerne un programme d'ordinateur installé dans un serveur de communication selon l'invention, ou dans un terminal de communication selon l'invention, un tel programme comportant des instructions dont l'exécution par un processeur provoque la mise en oeuvre d'un procédé de communication selon l'invention.

De plus, le programme d'ordinateur précité peut utiliser n'importe quel langage de programmation, et peut être sous la forme de code source, code objet, ou de code intermédiaire entre code source et code objet, par exemple sous une forme partiellement compilée.

En pratique, un tel programme d'ordinateur est enregistré sur un support d'informations lisible par un ordinateur, la présente invention vise aussi, par conséquent, un support d'informations lisible par un ordinateur, sur lequel sont enregistrées les instructions d'un programme d'ordinateur selon l'invention. Un tel support d'enregistrement peut être constitué par n'importe quelle entité ou dispositif capable de stocker un tel programme. Par exemple, le support peut comporter un moyen de stockage, tel qu'une ROM, par exemple un CD ROM ou une ROM de circuit microélectronique, ou encore un moyen d'enregistrement amovible tel qu'une clé USB ou un moyen d'enregistrement magnétique, tel qu'un disque dur. D'autre part, un programme ou module logiciel, selon l'invention, peut en particulier être téléchargé sur un réseau de type Internet.

Les avantages procurés par un serveur de communication, un terminal de communication et un programme d'ordinateur, tels que brièvement exposés plus haut, sont identiques ou contribuent à ceux déjà mentionnés en relation avec le procédé de communication selon l'invention, ces avantages ne seront par conséquent pas rappelés ici.

D'autres caractéristiques et avantages de la présente invention ressortiront de la description détaillée qui suit, laquelle fait référence aux dessins annexés dans lesquels :
- la figure 1 illustre un exemple de système de télécommunication dans lequel la présente invention est mise en oeuvre, et en particulier illustre les éléments fonctionnels incorporés respectivement dans un terminal de communication et dans un serveur de communication, selon l'invention ; et
- la figure 2 représente sous forme d'organigramme les principales étapes d'un procédé selon l'invention, de communication entre plusieurs utilisateurs munis de terminaux de communication, par l'intermédiaire d'une espace virtuel de communication.

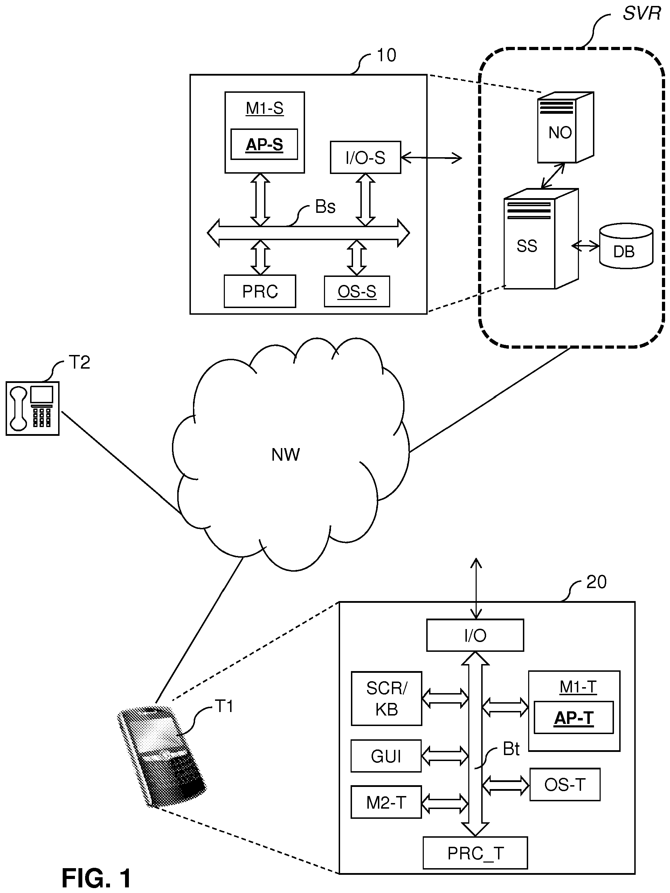

La figure 1 illustre un exemple de système de télécommunications dans lequel l'invention est mise en oeuvre. Dans cet exemple, on a représenté seulement deux terminaux de communication T1, T2 d'utilisateurs, par exemple de type *smartphone,* aptes à se connecter à un réseau mobile dit de 3^{ème} génération - par exemple conforme à la norme UMTS (*Universal Mobile Telecommunications System*) -, ou à un réseau mobile dit de 4^{ème} génération - par exemple conforme à la norme LTE (*Long Term Evolution*)*.* Les terminaux T1, T2 sont également aptes à se connecter à un réseau de communication NW constitué ici d'un réseau IP (*Internet Protocol*) de type Internet.

Le système comprend aussi un serveur de communication SVR connecté au réseau NW offrant un service d'hébergement et de gestion d'espaces virtuels de communication, conformément à l'invention. Le serveur SVR comprend de manière simplifiée une base de données DB chargée de stocker les données relatives aux espaces virtuels créés pour des groupes d'utilisateurs, une entité serveur de notifications NO chargée de transmettre des notifications aux membres d'un groupe pour les notifier notamment des changements opérés sur l'espace de communication du groupe considéré. Le serveur SVR comprend une entité serveur d'espaces SS chargée de mettre en oeuvre les modes de communication (activités) définis pour chaque espace de communication créé, en liaison avec la base de données DB et l'entité serveur de notifications NO.

Sur la figure 1, dans un but de simplification, le serveur SVR est représenté comme étant composé d'entités (NO, SS, DB) localisées à proximité les unes des autres ou confondues dans un même serveur. Cependant, selon le mode de réalisation choisi, le serveur SVR peut être également composé d'entités distantes ou réparties sur le réseau. En particulier, les données ou contenus multimédias associés aux activités, et partagés au sein de l'espace virtuel, peuvent provenir d'un serveur distinct et distant offrant un service de stockage de contenus multimédias (photos par exemple).

En pratique, le serveur de communication est constitués d'éléments agencés selon une architecture matérielle d'ordinateur 10. Cette architecture comprend notamment un processeur (PRC) et des composants mémoire de type ROM et RAM, communiquant par l'intermédiaire d'un ou plusieurs bus de données (Bs). D'un point de vue fonctionnel le serveur SVR comprend les modules suivants :
- un module I/O-S d'interface de communication réseau, chargé de communiquer avec le réseau NW pour, notamment, recevoir en provenance des terminaux d'utilisateurs T1, T2 des requêtes (création, action) liées à un espace virtuel stocké dans la base de données DB, ou transmettre des notifications ou des mises à jours concernant un espace virtuel donné aux terminaux (T1, T2) des utilisateurs du groupe associé à cet espace ;
- un module système d'exploitation, OS-S, gérant l'interaction entre les différents modules et le processeur PRC du serveur ;
- un module mémoire M1-S dans lequel sont enregistrées des instructions de programme de l'application serveur AP-S selon l'invention, dont l'exécution par le processeur (PRC) provoque la mise en oeuvre des étapes du procédé de communication selon l'invention qui sont mises en oeuvre dans le serveur SVR, et en particulier, d'une part, la création d'un espace virtuel de communication persistant, pour un groupe d'utilisateurs, lequel espace virtuel fournissant des modes de communication distincts (désignés par "activités") ; et, d'autre part, le traitement de requêtes d'actions relatives à une activité considérée, en provenance des terminaux des utilisateurs du groupe, de manière séquentielle selon l'ordre d'arrivée des requêtes.

Le module mémoire M1-S stocke en particulier les composants logiciels permettant l'accès, via un portail web, à l'entité serveur d'espaces SS et notamment les interfaces de programmation (API - *Application Programming Interface*) nécessaire à l'interaction à distance avec l'entité serveur d'espaces SS et la base de données d'espaces DB. Le module mémoire M1-S stocke aussi les logiques ou algorithmes d'exécution des modes de communication (désignés par "activités") disponibles pour chaque espace virtuel créé. Enfin, le module mémoire M1-S comporte un sous-module d'authentification d'utilisateurs chargé de vérifier des données d'identification d'un utilisateur d'un groupe d'utilisateurs, lors d'une tentative de connexion à un espace virtuel.

Toujours à la figure 1, la constitution interne d'un terminal d'utilisateur selon l'invention est illustrée sous le numéro de référence 20. Les terminaux d'utilisateur T1, T2 sont constitués d'éléments agencés selon une architecture matérielle d'ordinateur (20). Cette architecture comprend notamment un processeur (PRC_T) et des composants mémoire de type ROM et RAM communiquant par l'intermédiaire d'un ensemble d'un ou plusieurs bus de données (Bt).

D'un point de vue fonctionnel le terminal T1, ici un terminal mobile, inclut notamment les modules fonctionnels détaillés ci-après :
- un module I/O d'interface de communication réseau, chargé d'établir des sessions de communications selon un protocole de communication tel qu'un protocole de type HTTP (*HyperText Transfer Protocol*) ou HTTPS (*HyperText Transfer Protocol Secure*)*,* ou encore SIP (*Session Initiation Protocol*)*,* sur le réseau NW pour communiquer avec le serveur SVR, mais également de permettre l'établissement de sessions de communication de téléphonie mobile avec les autres terminaux du groupe (ici le terminal T2).
- Un module système d'exploitation, OS-T, par exemple le système d'exploitation Android™ de la société Google, gérant l'interaction entre les différents modules et le processeur (PRC-T) du terminal T1.
- Un module d'affichage SCR/KB associé à un clavier (tactile ou mécanique) et un écran d'affichage couplé avec un module d'interface graphique GUI (*Graphical User Interface*) pour présenter graphiquement à l'utilisateur du terminal des données relatives à un espace virtuel et aux contenus multimédias associés.
- Un module mémoire M1-T dans lequel sont enregistrées des instructions de programme de l'application cliente AP-T selon l'invention, dont l'exécution par le processeur (PRC-T) du terminal provoque la mise en oeuvre des étapes du procédé de communication selon l'invention qui sont mises en oeuvre dans un terminal d'utilisateur (T1, T2). En particulier, le module mémoire M1-T contient les instructions dont l'exécution déclenche la connexion au serveur de communication SVR via le réseau NW, afin de créer un espace virtuel de communication pour un groupe d'utilisateurs, et la génération de requêtes d'actions relatives à une activité considérée d'un espace déjà créé, puis leur envoi au serveur. La mémoire M1-T stocke aussi des composants logiciels chargés respectivement de mettre en oeuvre les algorithmes (encore désignés par "logiques") d'exécution des activités fournies par l'espace virtuel hébergé dans le serveur, et de mettre à jour ou télécharger ces algorithmes depuis le serveur SVR, en particulier lorsque l'application AP-T du terminal ne dispose pas de ces algorithmes initialement ou que de nouvelles activités et algorithmes d'exécution associés sont disponibles (évolution du service). Le module mémoire M1-T inclut également un module logiciel orchestrateur chargé de la gestion de l'exécution des activités en liaison avec le module d'interface graphique GUI.
- un second module mémoire M2-T, de type mémoire cache, c'est-à-dire une mémoire qui enregistre temporairement des copies de données provenant d'une autre source de donnée, afin de diminuer le temps d'accès (en lecture ou en écriture) d'un processeur à ces données. Cette mémoire M2-T est chargée ici de stocker une copie de réplication de l'état courant de l'espace virtuel considéré (ici, associé au groupe d'utilisateurs des terminaux T1 et T2), c'est-à-dire une copie de réplication des contenus multimédias associés aux activités fournies par l'espace virtuel. Cette copie de réplication est mise à jour à chaque connexion du terminal (T1, T2) au serveur SVR. L'accès aux données enregistrées dans la mémoire M2-T ou directement auprès du serveur SVR via une connexion réseau, est géré par un module logiciel spécifique de l'application AP-T.

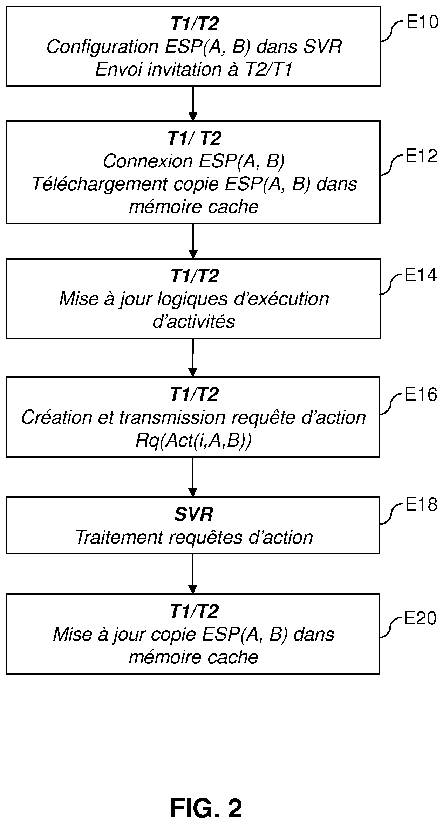

La **figure 2** représente sous forme d'organigramme les principales étapes du procédé de communication selon l'invention.

L'étape E10 représente l'opération de configuration d'un espace virtuel défini pour un groupe d'utilisateurs comprenant des utilisateurs, notés A et B, munis respectivement des terminaux T1 et T2. Cette configuration de l'espace ESP(A,B) dans le serveur SVR peut être faite à l'initiative de l'utilisateur A ou de l'utilisateur B, après connexion via un navigateur web de son terminal, à la page web d'accueil du serveur SVR. Au cours de cette opération de configuration, l'utilisateur créateur de l'espace, par exemple l'utilisateur A, détermine les utilisateurs appartenant au groupe, dans cet exemple les utilisateurs A et B et leur associe des identifiants de connexion à l'espace, qui serviront également de données d'entrée pour l'authentification des utilisateurs pour accéder à l'espace. Au cours de la configuration de l'espace, différents modes de communication, Act(i,A,B) (i variant de 1 à N), désignés par "activités", sont choisis par l'utilisateur A, par exemple les activités suivantes : partage/consultation de photos, partage/consultation de vidéos, partage/consultation de cartes (routières, d'itinéraires, géographiques, ...), communication textuelle (email, messages SMS et MMS, messagerie instantanée), communication téléphonique, communication visiophonique.

Les activités qui portent sur un ou plusieurs contenus multimédias (contenus d'activité) partagés par les utilisateurs du groupe, peuvent ainsi être mises en oeuvre par des actions spécifiques telles que la création, la modification ou suppression d'un contenu d'activité donné. Les activités portant sur un contenu multimédia génèrent des données qui ont vocation à être mémorisées après la cessation de l'activité (dessin modifié par exemple), tandis que les activités de communication "temps réel" telles que la communication vocale de type téléphonique génèrent des données vocales par nature fugitives (le temps de leur transmission d'un interlocuteur à l'autre). Cependant, selon un mode de réalisation possible, lors de la configuration de l'espace virtuel, l'utilisateur peut sélectionner une option d'archivage ou de création d'historiques, concernant les échanges (vocaux, visiophoniques ou par messages) entre utilisateurs, mais aussi concernant les contenus ou documents supprimés par un utilisateur. Dans ce dernier cas, cet archivage permet en particulier de mettre en oeuvre une restauration de contenus en cas de suppression inopinée ou involontaire.

Toujours à l'étape E10, suite à la création de l'espace virtuel ESP(A,B), les membres du groupe sont informés de la création de l'espace par l'envoi automatique par le serveur à destination des membres du groupe autres que l'utilisateur créateur de l'espace, d'une invitation à rejoindre l'espace virtuel.

A L'étape E12, un utilisateur du groupe (A,B) se connecte via son terminal (T1, T2) à l'espace ESP(A,B) après validation de ses identifiants de connexion par le serveur (adresse email et mot de passe, par exemple). Suite à la connexion du terminal de l'utilisateur au serveur (SVR), l'application cliente du terminal déclenche le téléchargement dans la mémoire cache (M2-T) du terminal d'une copie de réplication des contenus multimédias associés aux activités fournies par l'espace virtuel ESP(A,B).

A l'étape E14, suite ou pendant que le terminal considéré (T1, T2) est connecté au serveur, les algorithmes ou logiques d'exécution d'activités de l'espace ESP(A,B) sont mise à jour dans le terminal.

A l'étape E16, un (ou plusieurs) utilisateur(s) du groupe (A, B) sélectionne une action dans le cadre d'une activité, à partir de l'interface graphique de l'application cliente lancée dans son terminal, par exemple une modification apportée à un dessin (activité de dessin). Cette modification se traduit par la création d'un requête d'action Rq(Act(i,A,B)) par l'application cliente du terminal. Si le terminal est en mode connecté au serveur, la requête d'action est immédiatement transmise au serveur, sinon la requête est transmise dès la connexion du terminal au serveur.

Dans le cadre d'activités de type communication temps réel (communications vocale, visiophonique, ...) ou de messagerie (SMS, messagerie instantanée, ...) ou bien dans le cadre d'activités temps réel portant sur un contenu multimédia, par exemple une activité de dessin synchrone ou de synchronisation d'une carte d'itinéraire, on peut prévoir que les terminaux des utilisateurs impliqués puissent communiquer directement entre eux, sans passer par le serveur de communication, pour la mise à jour respective de leur copie de réplication de l'espace partagé. Cela permet d'augmenter les performances en termes de rapidité dans les échanges entre terminaux. Une connexion directe entre des terminaux peut alors être mise en oeuvre par une connexion de type "pair à pair" (*peer-to-peer* - P2P, en anglais), utilisant un protocole de communication de type HTTP, SIP (*Session Initiation Protocol*)*,* par exemple.

A noter qu'une activité exécutée de manière asynchrone par un seul utilisateur (par exemple une création de dessin) devient synchrone dans son exécution, dès qu'un autre utilisateur se connecte au serveur et rejoint cette activité.

A l'étape E18, le serveur SVR traite les requêtes d'action en provenance des terminaux des utilisateurs (A, B) dès leur réception. Selon le mode de réalisation choisi, les requêtes d'actions (création, modification ou suppression d'un contenu d'activité) sont traitées, par le serveur, en série selon leur ordre d'arrivée, par exemple par stockage temporaire dans une file d'attente de type FIFO (*first in first out*)*.* Ce traitement est associé à un contrôle de la cohérence des actions et du traitement à effectuer de manière à ne pas exécuter d'actions dont le résultat serait en contradiction avec une action effectuée précédemment. Par exemple, une action de modification d'un contenu ne sera pas exécutée si le contenu a déjà été supprimé suite au traitement d'une action antérieure par le serveur.

Après qu'une ou plusieurs actions ont été traitées par le serveur, à l'étape E20 le serveur transmet à destination de chacun des terminaux des utilisateurs du groupe, une mise à jour de la copie de réplication des contenus multimédias de l'espace virtuel, stockée dans la mémoire cache de chacun des terminaux d'utilisateur.

## Revendications

1. **Procédé** de communication entre plusieurs utilisateurs (A, B) munis de terminaux de communication (T1, T2), par l'intermédiaire d'une espace virtuel de communication fourni par un serveur de communication sur un réseau de communication, **caractérisé en ce qu'**il comprend des opérations consistant à :
- configurer (E10) une application serveur de manière à créer un espace virtuel de communication pour un groupe d'utilisateurs déterminé, ledit espace virtuel (ESP(A,B)) fournissant une pluralité de modes de communication distincts (Act(i,A,B)), dits "activités", chaque activité portant sur au moins un contenu multimédia associé, dit contenu d'activité, partagé par les utilisateurs du groupe, et étant mise en oeuvre par des actions déterminées dont l'exécution peut être déclenchée par tous les utilisateurs du groupe, lesdites actions incluant au moins des actions de création, modification ou suppression d'un contenu d'activité donné ;
- traiter (E18) des requêtes d'actions relatives à une activité considérée, en provenance des terminaux des utilisateurs du groupe, de manière séquentielle selon l'ordre d'arrivée desdites requêtes.

2. Procédé selon la revendication 1, dans lequel l'opération de configuration du serveur afin de créer ledit espace virtuel, comporte les étapes suivantes, mises en oeuvre au travers d'une page web d'accès audit serveur présentée dans un terminal d'un premier utilisateur :
- la désignation des utilisateurs du groupe d'utilisateurs de l'espace virtuel, chaque utilisateur du groupe étant associé à un identifiant d'utilisateur ;
- le choix des activités partagées par ledit groupe au travers de l'espace virtuel ;
- la transmission aux utilisateurs désignés du groupe d'une notification invitant lesdits utilisateurs à se connecter à l'espace virtuel.

3. Procédé selon la revendication 2, dans lequel chacun des terminaux des utilisateurs dudit groupe est équipé d'une application cliente d'accès à l'espace virtuel, ladite application cliente étant apte à déclencher la connexion du terminal audit serveur, ladite connexion déclenchant le téléchargement dans une mémoire cache du terminal d'une copie de réplication des contenus multimédias associés aux activités fournies par l'espace virtuel.

4. Procédé selon la revendication 3, dans lequel l'application cliente équipant un terminal d'utilisateur connecté audit serveur, met en oeuvre une opération initiale de mise à jour dans le terminal des algorithmes d'exécution des activités fournies par l'espace virtuel hébergé dans le serveur.

5. Procédé selon la revendication 3 ou 4, dans lequel lorsque le traitement dans le serveur d'une requête d'action relative à une activité considérée provoque l'exécution de ladite action, une mise à jour du ou des contenus multimédias associés à l'activité considérée, est effectuée dans la copie de réplication des contenus multimédias de l'espace virtuel, stockée dans la mémoire cache de chacun des terminaux d'utilisateur.

6. **Serveur** de communication (10) adapté pour la mise en oeuvre d'un procédé de communication sur un réseau de communication, entre plusieurs utilisateurs (A, B) munis de terminaux de communication (T1, T2), par l'intermédiaire d'une espace virtuel de communication fourni par ledit serveur, **caractérisé en ce qu'**il comprend :
- des moyens de création d'un espace virtuel de communication (E10) pour un groupe d'utilisateurs déterminé, ledit espace virtuel (ESP(A,B)) fournissant une pluralité de modes de communication distincts (Act(i,A,B)), dits "activités", au moins une activité portant sur au moins un contenu multimédia associé, dit contenu d'activité, partagé par les utilisateurs du groupe, et étant mise en oeuvre par des actions déterminées dont l'exécution peut être déclenchée par tous les utilisateurs du groupe, lesdites actions incluant au moins des actions de création, modification ou suppression d'un contenu d'activité donné ;
- des moyens de traitement de requêtes d'actions (E18) relatives à une activité considérée, en provenance des terminaux des utilisateurs du groupe, de manière séquentielle selon l'ordre d'arrivée desdites requêtes.

7. **Terminal** de communication, **caractérisé en ce qu'**il comporte :
- des moyens de connexion à un serveur de communication sur un réseau de communication, afin de créer un espace virtuel de communication pour un groupe d'utilisateurs déterminé, ledit espace virtuel (ESP(A,B)) fournissant une pluralité de modes de communication distincts (Act(i,A,B)), dits "activités", au moins une activité portant sur au moins un contenu multimédia associé, dit contenu d'activité, partagé par les utilisateurs du groupe, et étant mise en oeuvre par des actions déterminées dont l'exécution peut être déclenchée par tous les utilisateurs du groupe, lesdites actions incluant au moins des actions de création, modification ou suppression d'un contenu d'activité donné ;
- des moyens de génération et d'envoi, audit serveur, de requêtes d'actions relatives à une activité considérée, les requêtes d'actions relatives à une activité considérée en provenance des terminaux des utilisateurs du groupe étant traitées de manière séquentielle selon l'ordre d'arrivée desdites requêtes dans le serveur.

8. Terminal selon la revendication 7, comprenant des moyens de mémorisation, suite à la connexion audit serveur, d'une copie de réplication des contenus multimédias associés aux activités fournies par l'espace virtuel, et de mise à jour de ladite copie de réplication des contenus multimédias.

9. Terminal selon la revendication 8, comprenant des moyens de mémorisation des algorithmes d'exécution des activités fournies par l'espace virtuel fourni par le serveur, et de mise à jour desdits algorithmes.

10. **Programme** d'ordinateur installé dans un serveur de communication selon la revendication 6, ou dans un terminal de communication selon l'une quelconque des revendications 7 à 9, comportant des instructions de programme dont l'exécution par un processeur provoque la mise en oeuvre d'un procédé de communication selon l'une quelconque des revendications 1 à 5.

## Patentansprüche

1. Verfahren zur Kommunikation zwischen mehreren mit Kommunikationsendgeräten (T1, T2) versehenen Benutzern (A, B) mittels eines virtuellen Kommunikationsraums, der von einem Kommunikationsserver auf einem Kommunikationsnetz bereitgestellt wird, **dadurch gekennzeichnet, dass** es Vorgänge enthält, die darin bestehen:
- eine Server-Anwendung zu konfigurieren (E10), um einen virtuellen Kommunikationsraum für eine bestimmte Gruppe von Benutzern zu erzeugen, wobei der virtuelle Raum (ESP(A,B)) eine Vielzahl unterschiedlicher Kommunikationsmodi (Act(i,A,B)) bereitstellt, "Aktivitäten" genannt, wobei jede Aktivität sich auf mindestens einen zugeordneten Multimedia-Inhalt bezieht, Aktivitätsinhalt genannt, der von den Benutzern der Gruppe gemeinsam genutzt wird, und von bestimmten Aktionen durchgeführt wird, deren Ausführung von allen Benutzern der Gruppe ausgelöst werden kann, wobei die Aktionen mindestens Aktionen des Erzeugens, Änderns oder Entfernens eines gegebenen Aktivitätsinhalts umfassen;
- Anforderungen von Aktionen bezüglich einer betrachteten Aktivität, von den Endgeräten der Benutzer der Gruppe kommend, sequentiell gemäß der Ankunftsreihenfolge der Anforderungen zu verarbeiten (E18).

2. Verfahren nach Anspruch 1, wobei der Vorgang der Konfiguration des Servers, um den virtuellen Raum zu erzeugen, die folgenden Schritte aufweist, die über eine Webseite für den Zugang zum Server durchgeführt werden, die in einem Endgerät eines ersten Benutzers präsentiert wird:
- die Bezeichnung der Benutzer der Gruppe von Benutzern des virtuellen Raums, wobei jeder Benutzer der Gruppe einer Benutzerkennung zugeordnet ist;
- die Wahl der von der Gruppe gemeinsam genutzten Aktivitäten über den virtuellen Raum;
- die Übertragung an die bezeichneten Benutzer der Gruppe einer Benachrichtigung, die die Benutzer einlädt, sich mit dem virtuellen Raum zu verbinden.

3. Verfahren nach Anspruch 2, wobei jedes der Endgeräte der Benutzer der Gruppe mit einer Client-Anwendung für den Zugang zum virtuellen Raum ausgestattet ist, wobei die Client-Anwendung die Verbindung des Endgeräts mit dem Server auslösen kann, wobei die Verbindung das Herunterladen in einen Pufferspeicher des Endgeräts einer Replikationskopie der den vom virtuellen Raum bereitgestellten Aktivitäten zugeordneten Multimedia-Inhalte auslöst.

4. Verfahren nach Anspruch 3, wobei die ein mit dem Server verbundenes Benutzer-Endgerät ausstattende Client-Anwendung einen Anfangsvorgang der Aktualisierung im Endgerät der Ausführungsalgorithmen der Aktivitäten durchführt, die vom im Server untergebrachten virtuellen Raum bereitgestellt werden.

5. Verfahren nach Anspruch 3 oder 4, wobei, wenn die Verarbeitung im Server einer Aktionsanforderung bezüglich einer betrachteten Aktivität die Ausführung der Aktion bewirkt, eine Aktualisierung des oder der der betrachteten Aktivität zugeordneten Multimedia-Inhalts(Inhalte) in der Replikationskopie der Multimedia-Inhalte des virtuellen Raums ausgeführt wird, die im Pufferspeicher jedes der Benutzer-Endgeräte gespeichert ist.

6. Kommunikationsserver (10), der für die Durchführung eines Kommunikationsverfahrens auf einem Kommunikationsnetz zwischen mehreren mit Kommunikationsendgeräten (T1, T2) versehenen Benutzern (A, B) mittels eines vom Server bereitgestellten virtuellen Kommunikationsraums geeignet ist, **dadurch gekennzeichnet, dass** er enthält:
- Einrichtungen zur Erzeugung eines virtuellen Kommunikationsraums (E10) für eine bestimmte Gruppe von Benutzern, wobei der virtuelle Raum (ESP(A,B)) eine Vielzahl unterschiedlicher Kommunikationsmodi (Act(i,A,B)) bereitstellt, "Aktivitäten" genannt, wobei mindestens eine Aktivität sich auf mindestens einen zugeordneten Multimedia-Inhalt bezieht, Aktivitätsinhalt genannt, der von den Benutzern der Gruppe gemeinsam genutzt wird, und von bestimmten Aktionen durchgeführt wird, deren Ausführung von allen Benutzern der Gruppe ausgelöst werden kann, wobei die Aktionen mindestens Aktionen des Erzeugens, Änderns oder Entfernens eines gegebenen Aktivitätsinhalts umfassen;
- Einrichtungen zur Verarbeitung von Aktionsanforderungen (E18) bezüglich einer betrachteten Aktivität, von den Endgeräten der Benutzer der Gruppe kommend, sequentiell gemäß der Ankunftsreihenfolge der Anforderungen.

7. Kommunikationsendgerät, **dadurch gekennzeichnet, dass** es aufweist:
- Einrichtungen zur Verbindung mit einem Kommunikationsserver auf einem Kommunikationsnetz, um einen virtuellen Kommunikationsraum für eine bestimmte Gruppe von Benutzern zu erzeugen, wobei der virtuelle Raum (ESP(A,B)) eine Vielzahl unterschiedlicher Kommunikationsmodi (Act(i,A,B)) bereitstellt, "Aktivitäten" genannt, wobei mindestens eine Aktivität sich auf mindestens einen zugeordneten Multimedia-Inhalt bezieht, Aktivitätsinhalt genannt, der von den Benutzern der Gruppe gemeinsam genutzt wird, und von bestimmten Aktionen durchgeführt wird, deren Ausführung von allen Benutzern der Gruppe ausgelöst werden kann, wobei die Aktionen mindestens Aktionen des Erzeugens, Änderns oder Entfernens eines gegebenen Aktivitätsinhalts umfassen;
- Einrichtungen zum Erzeugen und zum Senden, an den Server, von Aktionsanforderungen bezüglich einer betrachteten Aktivität, wobei die Aktionsanforderungen bezüglich einer betrachteten Aktivität, die von den Benutzerendgeräten der Gruppe kommen, sequentiell gemäß der Ankunftsreihenfolge der Anforderungen im Server verarbeitet werden.

8. Endgerät nach Anspruch 7, das Einrichtungen zum Speichern, nach der Verbindung mit dem Server, einer Replikationskopie der den vom virtuellen Raum bereitgestellten Aktivitäten zugeordneten Multimedia-Inhalte und zum Aktualisieren der Replikationskopie der Multimedia-Inhalte enthält.

9. Endgerät nach Anspruch 8, das Einrichtungen zum Speichern der Ausführungsalgorithmen der Aktivitäten, die vom vom Server bereitgestellten virtuellen Raum bereitgestellt werden, und zum Aktualisieren der Algorithmen enthält.

10. Computerprogramm, das in einem Kommunikationsserver nach Anspruch 6 oder in einem Kommunikationsendgerät nach einem der Ansprüche 7 bis 9 installiert ist, das Programmanweisungen aufweist, deren Ausführung durch einen Prozessor die Durchführung eines Kommunikationsverfahrens nach einem der Ansprüche 1 bis 5 bewirkt.

## Claims

1. **Method** of communication between several users (A, B) furnished with communication terminals (T1, T2), by way of a virtual communication space provided by a communication server on a communication network, **characterized in that** it comprises operations consisting in:
- configuring (E10) a server application in such a way as to create a virtual communication space for a determined group of users, said virtual space (ESP (A,B)) providing a plurality of distinct modes of communication (Act(i,A,B)), termed "activities", each activity pertaining to at least one associated multimedia content, termed activity content, shared by the users of the group, and being implemented by determined actions whose execution can be triggered by all the users of the group, said actions including at least actions of creation, modification or deletion of a given activity content;
- processing (E18) the requests of actions relating to a considered activity, originating from the terminals of the users of the group, in a sequential manner according to the order of arrival of said requests.

2. Method according to Claim 1, in which the operation of configuring the server so as to create said virtual space, comprises the following steps, implemented through a web page for accessing said server, said page being presented in a terminal of a first user:
- the designating of the users of the group of users of the virtual space, each user of the group being associated with a user identifier;
- the choosing of the activities shared by said group through the virtual space;
- the transmitting to the designated users of the group of a notification inviting said users to connect to the virtual space.

3. Method according to Claim 2, in which each of the terminals of the users of said group is equipped with a client application for accessing the virtual space, said client application being able to trigger the connection of the terminal to said server, said connection triggering the downloading into a cache memory of the terminal of a copy for replicating the multimedia contents associated with the activities provided by the virtual space.

4. Method according to Claim 3, in which the client application with which a user terminal connected to said server is equipped, implements an initial operation of updating in the terminal of the algorithms for executing the activities provided by the virtual space hosted in the server.

5. Method according to Claim 3 or 4, in which when the processing in the server of an action request relating to a considered activity brings about the execution of said action, an updating of the multimedia content or contents associated with the activity considered is performed in the copy for replicating the multimedia contents of the virtual space, which copy is stored in the cache memory of each of the user terminals.

6. **Communication server** (10) adapted for the implementation of a method of communication on a communication network, between several users (A, B) furnished with communication terminals (T1, T2), by way of a virtual communication space provided by said server, **characterized in that** it comprises:
- means for creating a virtual communication space (E10) for a determined group of users, said virtual space (ESP(A,B)) providing a plurality of distinct modes of communication (Act(i,A,B)), termed "activities", at least one activity pertaining to at least one associated multimedia content, termed activity content, shared by the users of the group, and being implemented by determined actions whose execution can be triggered by all the users of the group, said actions including at least actions of creation, modification or deletion of a given activity content;
- means for processing requests of actions (E18) relating to a considered activity, originating from the terminals of the users of the group, in a sequential manner according to the order of arrival of said requests.

7. **Communication terminal, characterized in that** it comprises:
- means for connecting to a communication server on a communication network, so as to create a virtual communication space for a determined group of users, said virtual space (ESP(A,B)) providing a plurality of distinct modes of communication (Act(i,A,B)), termed "activities", at least one activity pertaining to at least one associated multimedia content, termed activity content, shared by the users of the group, and being implemented by determined actions whose execution can be triggered by all the users of the group, said actions including at least actions of creation, modification or deletion of a given activity content;
- means for generating and dispatching, to said server, requests of actions relating to a considered activity, the requests of actions relating to a considered activity originating from the terminals of the users of the group being processed in a sequential manner according to the order of arrival of said requests in the server.

8. Terminal according to Claim 7, comprising means for storing, subsequent to the connection to said server, a copy for replicating the multimedia contents associated with the activities provided by the virtual space, and for updating said copy for replicating the multimedia contents.

9. Terminal according to Claim 8, comprising means for storing the algorithms for executing the activities provided by the virtual space provided by the server, and for updating said algorithms.

10. **Computer program** installed in a communication server according to Claim 6, or in a communication terminal according to any one of Claims 7 to 9, comprising program instructions whose execution by a processor brings about the implementation of a communication method according to any one of Claims 1 to 5.
